Europäisches Patentamt

European Patent Office

Office européen des brevets

(19)

(11) **EP 1 345 024 A1**

(12) **EUROPEAN PATENT APPLICATION**

(43) Date of publication:
**17.09.2003 Bulletin 2003/38**

(51) Int Cl.⁷: **G01N 21/21**

(21) Application number: **02290611.9**

(22) Date of filing: **11.03.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicants:
• **CENTRE NATIONAL DE
LA RECHERCHE SCIENTIFIQUE (CNRS)
75794 Paris Cedex 16 (FR)**
• **Ecole Polytechnique
91128 Palaiseau cedex (FR)**
• **Jobin Yvon S.A.
91160 Longjumeau (FR)**

(72) Inventors:
• **Garcia-Caurel, Enrique
75014 Paris (FR)**

• **Moncel, Jean-Luc
91220 Bretigny sur Orge (FR)**
• **Drevillon, Bernard
92140 Clamart (FR)**
• **Bos, Francis
91160 Longjumeau (FR)**

(74) Representative: **Catherine, Alain et al
Cabinet Harlé & Phélip
7, rue de Madrid
75008 Paris (FR)**

Remarks:
Amended claims in accordance with Rule 86 (2)
EPC.

(54) **Method and device for polarimetric measurement of the Mueller matrix coefficients of a
sample in the far ultraviolet to visible spectral range**

(57)     The invention concerns a polarimetric system
and a method of polarimetric measurement of the Mueller matrix coefficients of a sample (7). The polarimetric
system contains an excitation section (1) emitting a light
beam (2). Said light beam passes through a polarisation
state generator (PSG)(5) and is focused on the sample
(7) on a sample holder (3). After reflection on the sample
surface (8), the beam goes through an analysis section
(4) containing a polarisation state detector (PSD) or polarimeter (9) and detection means (10).

According to the invention, the light beam (2) emitted by the excitation section (1) is in the spectral range
from the far ultraviolet to the visible. The light beam
propagates through the excitation section (1) up to
through the analysis section (4) under a low partial pressure of far ultraviolet absorbing gases. The polarimetric
system comprises one or more air tight chambers (17),
said chambers containing said excitation section, said
analysis section and said sample holder.

FIGURE 1

**Description**

The invention relates to a method of polarimetric measurement of the representative parameters of a sample and a polarimetric system for analysing such a sample.

In order to measure parameters which are representative of a sample (for example, of its composition and thickness), it is conventional to make use of an ellipsometer.

Ellipsometry is a powerful non invasive probe in which reflectance data are measured by reflecting electromagnetic radiation from a sample. Briefly, the surface of a studied sample is illuminated by a photon beam that is reflected and the polarisation state of the reflected beam (that may be transmitted) is compared to that of the incident beam.

In the technique of ellipsometry, the polarisation vector E of a beam is generally represented by its projections Es and Ep, respectively perpendicular and parallel to the incidence plane. The ratio denoting the change in the polarisation state produced by the interaction of a beam with a surface studied is generally represented by the complex quantity:

$$\rho = tg \ \psi \ exp \ (i\Delta) = (Ep/Es)^r \ / \ (Ep/Es)^i$$

The aim therefore is to measure the independent parameters $\psi$ and $\Delta$ for a given surface.

This conventional ellipsometry method proves satisfactory when measuring isotropic layers with smooth interfaces.

To study polarising materials, however, a more general method is needed.

Polarimetric systems enable to measure all the polarisation components of light in any medium.

The polarisation state of light can be represented completely by a fourth dimension vector, called the Stokes light vector (S).

A description of this can be found in the work of Azzam and Bashara entitled "ellipsometry and polarised light", North-Holland, pp. 55-60.

The Stokes vector consists of the I, Q, U and V coordinates, respectively representing the mean intensities of the four different polarisation states.

The interaction of light with any medium can then be represented by a matrix, so-called, the Mueller matrix, of dimensions 4 x 4 with therefore 16 coefficients.

The extraction of the 16 parameters during polarimetric measurements enables characterisation of the said medium.

For the special case of conventional ellipsometry, this matrix method reduces to a simple 2 x 2 matrix, so called, the Jones matrix.

Current state of the art polarimetric systems use light sources emitting a luminous beam whose photon energy ranges from 1.5 to 6.0 eV, i.e. corresponding to the visible and the near ultraviolet (VIS-UV).

An extension in the Far ultraviolet (FUV), typically up to 9 or 10 eV, would enable precise caracterisation of a number of materials such as wide band gap semiconductor (GaN, C, ...), high-k dielectrics that are not measurable with current polarimetric systems and the capability to perform optical measurements at the photon wavelength of the lasers currently used in microelectronic processes (157 nm).

The purpose of the invention is hence to remedy the short comings mentioned above and to propose a polarimetric system having one or more of the following features and advantages : namely, a fast data acquisition, be usable for measurements in real time, offering a wide photon energy range in the far ultraviolet and a simple and compact design.

In addition, the invention has as an objective a method for the measurement of the representative parameters of a sample, this method being at once precise, rapid and easy to implement.

To this end, the invention concerns a method of polarimetric measurement of a sample, represented by the coefficients of a Mueller matrix, in which the sample located inside an air tight chamber is illuminated by a polarised incident light beam produced by a polarisation state generator (PSG), said beam being reflected by the sample, analysed by a polarisation state detector (PSD) and then measured by detections means, said PSG, sample, PSD and detection means being located in at least an air tight chamber.

According to the invention,

- one illuminates the sample with a light beam in the spectral range from the far ultraviolet to the visible,
- one extracts the coefficients of the Mueller matrix from polarimetric measurements performed under a low partial pressure of far ultraviolet highly absorbing gases.

According to various embodiments, the present invention also concerns the characteristics below, considered individually or in all their technical possible combinations.

- one evacuates far ultraviolet highly absorbing gases by realising an overpressure of far ultraviolet non absorbing gas inside said chambers,
- one evacuates far ultraviolet highly absorbing gases by pumping down said chambers,
- one evacuates far ultraviolet highly absorbing gases by pumping down said chambers and then refilling said chambers with far ultraviolet non absorbing gas,
- the energy range of the incident light beam emitted by the excitation section is between 1.5 and 9.5 eV,
- the parameters representative of the sample are measured by ellipsometry,
- the incident light beam is modulated by a phase modulator at a frequency $\omega$, the intensity $I(t)$ measured by the detection means as a function of the modulation amplitude $\delta(t)$ is:

$$I(t)=I(I_0 + I_s \sin(\delta(t)) + I_c \cos(\delta(t)))$$

where

$$\delta(t) = A_0 + A_1 \sin\omega t + \sum_{n=2} A_n \sin(n\omega t + \phi_n)$$

- a first Fourier-transform processing means analyses the signal $I(t)$ into Fourier components, $S_0(dc)$, $S_1$, $S_2$ at frequency $\omega$ and at frequency $2\omega$,
- second processing means produces values $I_0$, $I_s$, $I_c$ from the measured harmonics $S_0$, $S_1$, $S_2$ according to the following relation:

$$\begin{pmatrix} S_0 \\ S_1 \\ S_2 \end{pmatrix} = I \begin{pmatrix} 1 & 0 & 0 \\ 0 & 2T_1 J_1(A) & 0 \\ 0 & 0 & 2T_2 J_2(A) \end{pmatrix} \cdot \begin{pmatrix} 1 & c_{s,0} & J_0(A)+c_{c,0} \\ 0 & 1 & c_{c,\omega} \\ 0 & c_{s,2\omega} & 1 \end{pmatrix} \cdot \begin{pmatrix} I_0 \\ I_s \\ I_c \end{pmatrix}$$

where $J_0$, $J_1$ and $J_2$ are the Bessel functions of order 0, 1, 2; $T_1$ and $T_2$ are specific constant of the detection means and $C_{c,0}$, $C_{s,0}$, $C_{s,\omega}$ and $C_{s,2\omega}$ describe the weak coupling between the three Fourier components, the modulation amplitude A being generally chosen such as $J_0(A) + C_{c,0} = 0$:

$$S_\omega \sim T_1 I_s + C_{s,\omega} I_c$$

$$S_{2\omega} \sim T_2 I_c + C_{s,2\omega} I_s$$

- The spectroscopic variations of ($T_1$, $T_2$) and ($C_{c,0}$, $C_{s,0}$, $C_{s,\omega}$ and $C_{s,2\omega}$) are calculated by fitting a polynomial variation to the experimental values measured with the orientations of said polarisation state generator, modulator and polarisation state detector, being respectively P, M and A, said calibration is performed according to configurations P - M = ± 45°; A = 0°, 90°; M = ± 45° and P - M = ± 45°; A = ± 45°; M = ± 45°,
- third processing means produces the value $\Psi$ and $\Delta$ from $I_o$, $I_s$, and $I_c$ according to simple trigonometric formulae,

- a fourth degree polynomial is used for fitting the experimental values ($T_1$, $T_2$, $C_{c,0}$, $C_{s,0}$, $C_{s,\omega}$ and $C_{s,2\omega}$),
- the frequency $\omega$ of said modulator is between 30 and 60kHz.

The invention concerns as well a polarimetric system for analysing a sample comprising :

- an excitation section emitting a light beam, said excitation section comprising a polarisation state generator and optical means to focus said beam onto the sample,
- a sample holder,
- an analysis section comprising a polarisation state detector, detection means.

According to the invention,

- the light beam emitted by the excitation section is in the spectral range from the far ultraviolet to the visible,
- the light beam propagates through the excitation section up to through the analysis section under a low partial pressure of far ultraviolet absorbing gases,

and the polarimetric system comprises at least an air tight chamber, said chambers containing said excitation section, said analysis section and the sample-holder.

According to various embodiments, the present invention also concerns the characteristics below, considered individually or in all their technical possible combinations.

- said chambers are interconnected so as to form a unique chamber,
- said chambers comprise a pumping station and pressure monitoring means,
- the pumping station comprises at least a primary pump.
- the polarimetric system comprises heating means for heating said chambers or for the thermal stability of the optical components,
- the polarimetric system contains control means for regulating the temperature of the heating means within a predetermined temperature range,
- the polarimetric system comprises a source of far ultraviolet non absorbing gases and means for introducing and evacuating said gases into said chambers,
- said gases comprises nitrogen ($N_2$),
- the sample holder comprises means for tilting said sample holder controlled by external means,
- the excitation section comprises a monochromator positioned before the polariser,
- wherein the detection means comprises a monochromator,
- a slit is positioned at the entrance of said monochromator and focusing means focuses the beam onto the said entrance slit,
- said focusing means comprises a $MgF_2$ lens or another FUV transparent material,
- the detection means comprises a first detector covering radiations in the spectral range from visible to ultraviolet and a second detector for radiations in the far ultraviolet spectrum,
- a diaphragm is located in front of the first detector and the second detector in order to reject parasitic beams,
- said optical means comprises concave mirrors,
- said concave mirrors are coated with a protecting layer, said layer being in $MgF_2$,
- said polarimetric system is an ellipsometer.

To facilitate further description of the invention, the following drawings are provided in which :

Figure 1 is a schematic view of a polarimetric system according to the invention.
Figure 2 is a schematic view of the ellipsometric system according to the invention.
Figure 3 is a schematic view of a first embodiment of the invention.
Figure 4 shows the experimental (squares) and best fitted (solid line) values obtained as a function of the incident photon energy for the ellipsometric angles $\psi$ and $\Delta$ of a crystal silicon (c - Si) wafer eventually covered with a native oxide layer.
Figure 5 shows the experimental (squares) and best fitted (solid line) values obtained as a function of the incident photon energy for the ellipsometric angles $\psi$ and $\Delta$ of a thin $SiO_2$ film thermally grown on a c - Si wafer.

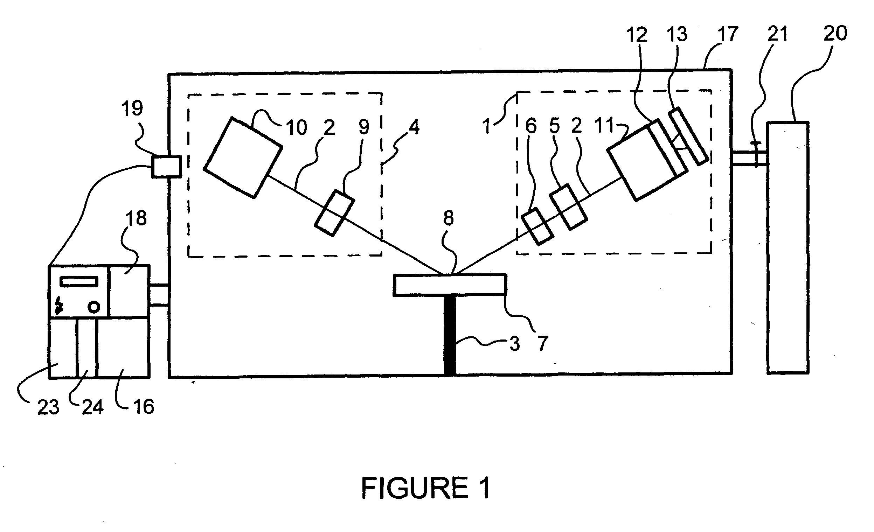

These drawings are provided for illustrative purposes only and should not be used to unduly limit the scope of the invention.
The polarimetric system according to the invention shown in Fig. 1, contains an excitation section 1 emitting a light beam 2, a sample holder 3 and an analysis section 4.
The excitation section 1 comprises a polarisation state generator 5 (PSG) through which passes the light beam 2. First optical means 6 focuses said beam 2 onto the sample 7 located on a sample-holder 3. The beam 2 reflects off the sample surface 8 and passes through the analysis section 4. In a more general case, the beam is scattered by the sample surface 8 and passes through the analysis section 4. The analysis section comprises a polarisation state detector 9 (PSD) or polarimeter and detection means 10 for detecting the light beam 2.

The polarimetric system comprises as well a monochromator 11 which is located in a first embodiment before the light beam 2 enters the polarisation state generator 5. In a second embodiment, it is located after it exits the polarisation state detector 9. A slit 12 is positioned at the entrance of said monochromator 11 and focusing means 13 focuses the beam onto the entrance slit 12.

Advantageously, the focusing means 13 contains a $MgF_2$ lens or an equivalent far ultraviolet transparent lens.

The invention regards as well conventional ellipsometry that is a special case of polarimetry for isotropic layers with smooth interfaces.

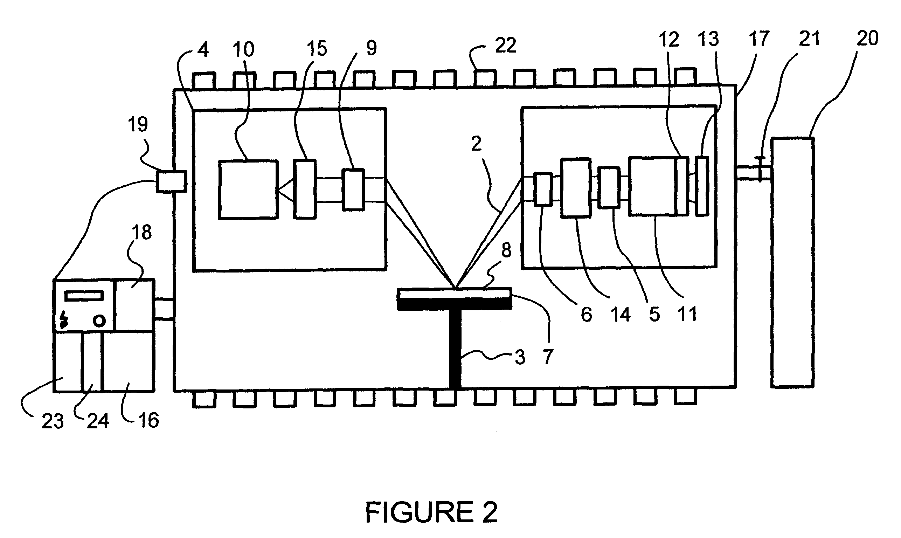

The ellipsometric system according to the invention, shown in Fig.2, contains an excitation section 1 emitting a light beam 2, a sample holder 3 and an analysis section 4.

The excitation section 1 comprises a polariser 5 which polarises the incident beam 2. The polarisation state of the light beam 2 emerging from the polariser 5 is hence precisely known. The light beam then goes through a phase modulator 14, preferably photoelastic, which modulates the beam 2 at a frequency ω. The photoelastic modulator 14 is known to have advantageously a wide optic window.

After going through the phase modulator 14, the beam 2 falls onto first optical means 6 which focuses said beam 2 onto the sample 7 located on a sample-holder 3. The sample holder 3 contains preferably means for tilting said sample holder. The light beam 2 emitted by the excitation section 1 has a direction and sense of propagation which defines an incident plane. The incidence angle of the light beam 2 on the sample surface 8 is defined as the angle at which the focused beam strikes the sample surface 8 with respect to the normal to the surface 8. For example, a beam 2 with normal incidence at the sample surface 8 has an incidence angle of zero degree. The angle of incidence of the beam can be advantageously varied. The purpose of the focusing beam is to obtain a small spot on the sample, i.e. a compact spot with preferably dimensions inferior to a few tenths of mm$^2$. This spot should provide a lateral resolution sufficient to map the sample surface 8.

The beam 2 reflected by the sample surface 8 falls onto the analysis section 4. Said analysis section 4 comprises an analyser 9 and second optical means 15 coupling said analyser 9 and detection means 10. The first and second optical means 6, 15 are preferably concave mirrors. Advantageously a protective layer such as a $MgF_2$ layer is deposited on the surface of said mirrors. The signal detected by the detection means 10 is then sent to a treatment unit 16. The treatment unit 16 contains a data signal processor and a computer. The data signal processor is equipped with an analog-digital converter (ADC) and a memory of the FIFO type.

The ellipsometric system comprises as well a monochromator 11. In a first embodiment, said monochromator is located in the excitation section 1. The monochromator 11 is then located before, in the sense of propagation of the light beam, the polariser 5. In a second embodiment, the monochromator 11 is located in the analysis section 4 between the analyser 9 and the detection means 10. A slit 12 is positioned at the entrance of said monochromator 11 and focusing means 13 focuses the beam onto the entrance slit 12. Advantageously, the focusing means 13 contains a $MgF_2$ lens.

According to the invention, the polarimetric system comprises at least an air tight chamber 17, said chambers 17 containing said excitation section 1, said analysis section 4 and the sample-holder 3. The tilting of the sample holder 3 is controlled by external means to the chamber 17 containing said sample holder. In a preferred embodiment, the chambers 17 are interconnected to form a unique vessel.

Moreover, the light beam 2 emitted by the excitation section is in the spectral range from the far ultraviolet to the visible. We shall call hereinafter the "far ultraviolet" region of the electromagnetic spectrum, the photon energy region extending from 6 eV to 10.3 eV. In order to avoid absorption of the far ultraviolet light by atmospheric gases such as oxygen, ozone, water vapour, etc.., the light beam propagates through the excitation section 1 up to through the analysis section 4 under a low partial pressure of far ultraviolet highly absorbing gases. We shall call hereinafter "a low partial pressure", a partial pressure of far ultraviolet highly absorbing gases ranging from $10^{-4}$ to $10^{-3}$ mbar.

The low partial pressure of far ultraviolet absorbing gases inside said air tight chambers 17 is preferably obtained either by air evacuation using a pumping station 18 or by rinsing air tight chamber 17 with a far ultraviolet non absorbing gas such as nitrogen $N_2$. It can be obtained as well by air evacuation using a pumping station 18 and then refilling of said chambers with a far ultraviolet non absorbing gas such as nitrogen $N_2$. The chambers contain pressure monitoring means 19 to monitor the vacuum realised by the pumping station 18. In a particular embodiment, the pumping station 18 contains at least a primary pump such as a rotary pump,... But other or complementary vacuum equipments are possible like turbomolecular pumps. The monitoring means 19 comprises for example manometers and cold cathode gauges.

Once the air tight chambers 17 are evacuated, polarimetric measurements can be performed either under the previously described vacuum conditions or in a far UV non absorbing environment achieved by refilling said chamber 17 with FUV non absorbing gases up to an overatmospheric pressure. When working under vacuum conditions, said chamber 17 must be filled with FUV non absorbing gases for sample modification purpose.

The polarimetric system thus comprises a source 20 of far ultraviolet non absorbing gases and means 21 for connecting and leaking said gases into the polarimetric system.

To reduce further the partial pressure of far ultraviolet absorbing gases and especially the water vapour, the chambers are equipped with heating means 22. The chambers 17 are baked in vacuum to get rid of the water film covering the inner walls of the chambers. This water film appears at each exposition of said chambers to air, for example when changing the sample 7. Without baking of the chambers, the water molecules responsible for a large amount of the far ultraviolet light absorption would slowly desorb from the inner walls of the chamber maintaining inside the chambers a remanent water vapour pressure. In order to control the bake-out, the ellipsometric system contains control sensors 23 for measuring the temperature of the chambers 17 at various locations and control means 24 for regulating the temperature of the heating means within a predetermined temperature range. In a preferred embodiment, the heating means 22 comprises heating tapes and the control means 24 contains temperature gauges.

Hereinafter a preferred embodiment of the invention will be described with reference to the appended drawings to explain in more details the invention.

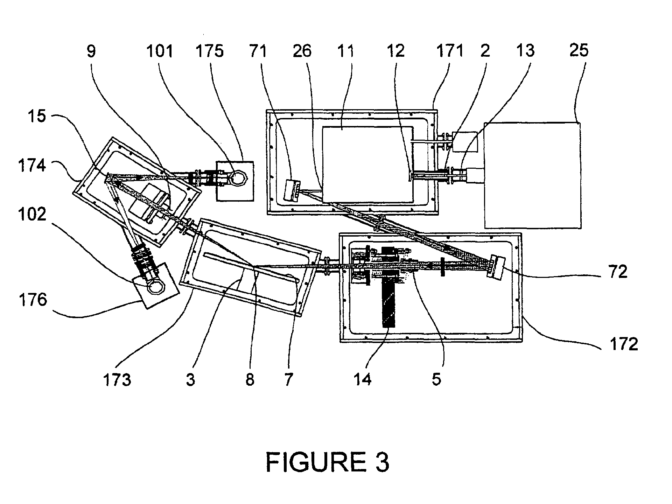

Figure 3 shows a particular embodiment of the polarimetric system according to the invention.

In a first part, the optical set-up is described. The light beam 2 emitted by the excitation section 1 is generated by a light source 25 containing a water-cooled high-pressure arc-discharge deuterium lamp. The photon energies of the light beam 2 range from 1.5 to 10.3 eV. The light beam 2 goes firstly through a monochromator 11 covering the spectral range from 1 to 9.5 eV. Said monochromator 11 has an exit slit 26 of 0.5 mm which provides an outgoing beam of 2 nm of bandwidth. To avoid parasitic diffused light impinging the diffraction grating of the monochromator 11, a 0.5 mm slit 12 is set at the entrance of this device 11. The light beam 2 produced by the deuterium lamp 25 having a considerable divergence, a $MgF_2$ lens 13 (f = 50 mm), is located between the source 25 and the monochromator 11 to focus the light beam 2 onto said entrance slit 12.

After the monochromator 11, the light beam goes through a polariser 5, a phase-modulator 14 and optical means 71, 72 to focus said beam on the sample surface 8. The light beam 2 leaving the monochromator 11 is linearly polarised by the polariser 5. The polariser 5 is a $MgF_2$ Rochon polariser with a principal axis oriented at 45° with respect to the principal axis of the phase modulator 14. The phase modulator 14 is a photoelastic modulator with a $CaF_2$ active optical element working at a frequency of 50 kHz. In order to focus the beam on the sample surface 8, two aluminum concave mirrors 71, 72 are located between the monochromator 11 and the polariser 5, with focal lengths of 150 and 250 mm respectively. Both mirrors 71, 72 are coated with a thin $MgF_2$ layer (about 20 Å thick) in order to prevent time degradation.

After reflection on the sample surface 8, the beam passes through the analysis section 4. Said analysis section 4 contains an analyser 9 consisting of another $MgF_2$ Rochon polariser with 0.3 cm diameter. The light beam is reflected after going through said analyser 9 by a third $MgF_2$ coated aluminum concave mirror 15 (f = 200 mm) that focuses the beam on detection means 10. To cover all the spectral range, the detection means 10 comprises two detectors 101, 102. The first detector 101 is a photomultiplier that probes radiation in the spectral range from 1 to 6 eV. The second detector 102 is a solar blind photomultiplier optimised to detect radiation in the 5.5 to 12 eV energy range.

Since transmission of the light beam through a Rochon polariser 9 splits said beam into two beams having a relative polarisation phase difference of 90°, a diaphragm is located in front of the active area of each detector 101, 102. This diaphragm avoids simultaneous detection of both beams. After detection, the signal is sent to a treatment unit.

In this second part, we describe the means to obtain a low partial pressure of far ultraviolet highly absorbing gases. All the optical system is enclosed in six air-tight chambers 171,172, ..., 176 that must be evacuated to extract all the far ultraviolet absorbing chemical species by vacuum. The chambers 17 are interconnected forming, therefore, a single volume to be evacuated. Chamber 171 contains the monochromator 11 and a first concave mirror 71. Chamber 172 includes a second concave mirror 72, the polariser 5 and the photoelastic modulator 14. Chamber 173 contains the sample holder 3 fixed to a chamber wall. Under vacuum conditions, the chamber walls can present small deformations due to the pressure differences that can then, perturb the beam 2 alignment. To overcome this problem the sample holder 3 can be mechanically tilted by external means. Chamber 174 contains the analyser 9 and the mirror 15 used to focus the light beam onto the selected detector 10. Chambers 175 and 176 contain each one, the corresponding photomultiplier and the related electronics.

The low partial pressure of highly absorbing gases such as water vapour, oxygen, ozone, ... is first realised by pumping down the volume constituted by the six chambers 171, 172, ..., 176 with a pumping unit 18. Then the ellipsometric experiments can be performed either under these vacuum conditions or by filling the chambers 171, 172, ..., 176 with FUV non absorbing gases up to an overatmospheric pressure. If measurements are performed under vacuum, replacement of the sample requires the filling of said chambers with FUV non absorbing gas such as Nitrogen. When the replacement is performed a pumping stage is necessary to restore vacuum conditions. Working under overpressure requires lower pressure for sample replacement, then pumping down to evacuate the absorbing species and finally refilling the chamber up to the working overpressure.

The specifications of the polarimetric system according to the invention are provided for illustrative purposes only and should not be used to unduly limit the scope of the present invention. For example, the polarimetric system is not limited to ex situ measurements, i.e. the sample to analyse has been prepared in an external set-up but can be adapted for in situ operation. To do this, the sample holder 3 can be substituted by a process reactor chamber.

The invention also concerns a method of polarimetric measurement of the representative parameters of a sample 7. In this method, the sample 7 located inside a first air tight chamber 17 is illuminated by a polarised incident light beam 2 produced by a polarisation state generator (PSG). After reflection of the beam by the sample 7, the beam is analysed by a polarisation state detector (PSD) 9 and then measured by detections means 10. Said polarisation state generator 5, polarisation state detector 9 and detection means 10 are located either in the said first chamber or at least in a second air tight chamber. Preferably, all the chambers 17 are interconnected to form a unique volume where the beam propagates.

According to the invention, one evacuates far ultraviolet highly absorbing gases from said chambers prior to illumination of the sample. This evacuation is in a first embodiment achieved by realising an overpressure of far ultraviolet non absorbing gas inside the said chambers 17. In a second embodiment, this is achieved by pumping down the said chambers 17. In a third embodiment, one evacuates far ultraviolet highly absorbing gases by pumping down said chambers 17 and then refills said chambers 17 with far ultraviolet non absorbing gas. One illuminates the sample with a light beam in the spectral range from the far ultraviolet to the visible. Preferably, the energy range of the incident light beam is between 1.5 and 9.5 eV. One extracts then the coefficients of the Mueller matrix from polarimetric measurements.

In a particular embodiment, the parameters representative of the sample are measured by phase modulated ellipsometry. Assuming then that the behaviour of the optical elements can be represented by means of a 2 x 2 Jones matrix, the intensity, I(t), detected by the detection means is a function of the modulation amplitude ($\delta(t)$) induced by the phase modulator and the orientation of the different optical elements. This dependence is expressed as follows:

$$I(t)=I(I_0 + I_s \sin(\delta(t)) + I_c \cos(\delta(t)))$$

where

$$\delta(t) = A_0 + A_1 \sin\omega t + \sum_{n=2} A_n \sin(n\omega t + \phi_n)$$

In the last expression, I is the overall beam intensity transmitted through the ellipsometric system, the intensities $I_0$, $I_s$, and $I_c$ are functions of the position of the optical elements and the sample characterisation. The amplitudes of the n-th harmonic, $A_n$, are considered to be much more smaller than $A_1$, the amplitude at the fundamental modulation frequency $\omega$. Preferably, the modulation frequency is between 30 and 60kHz

A first Fourier-transform processing means analyses the signal I(t) into Fourrier components, $S_0$(dc), $S_1$, $S_2$ at frequency $\omega$ and at frequency $2\omega$.

The ellipsometric angles $\psi$ and $\Delta$ are trigonometric functions of the three intensities Io, Is, Ic which are related to the measured harmonics $S_0$, $S_1$, $S_2$ according to the following relation:

$$\begin{pmatrix} S_0 \\ S_1 \\ S_2 \end{pmatrix} = I \begin{pmatrix} 1 & 0 & 0 \\ 0 & 2T_1 J_1(A) & 0 \\ 0 & 0 & 2T_2 J_2(A) \end{pmatrix} \cdot \begin{pmatrix} 1 & c_{s,0} & J_0(A) + c_{c,0} \\ 0 & 1 & c_{c,\omega} \\ 0 & c_{s,2\omega} & 1 \end{pmatrix} \cdot \begin{pmatrix} I_0 \\ I_S \\ I_C \end{pmatrix}$$

In this relation, the coefficients $T_1$ and $T_2$ account for the transmission efficiency of the harmonics $\omega$ and $2\omega$ by the detection system, and the other coefficients represent the coupling between the three Fourier components of the detected signal. The modulation amplitude A is generally chosen such as $J_0(A) + C_{c,0} = 0$.

If we define the ratios $S_\omega$ and $S_{2\omega}$ as:

$$S_\omega = \frac{T_1 I_S + c_{c,\omega} I_C}{I_0 + c_{s,0} I_S} \; ; S_{2\omega} = \frac{T_2 I_C + c_{s,2\omega}}{I_0 + c_{s,0} I_s} \; ,$$

the following expression relating the intensities $I_s$ and $I_c$ with the measured harmonics can be approximated assuming the coupling coefficients to be much smaller than the unity :

$$S_{\omega} \sim T_1 I_s + C_{s,\omega} I_c$$

$$S_{2\omega} \sim T_2 I_c + C_{s,2\omega} I_s$$

In order to determine the coefficients $T_1$, $T_2$, $C_{c,0}$, $C_{c,\omega}$ and $C_{s,2\omega}$ it is necessary to measure the value of $S_{\omega}$ and $S_{2\omega}$ in several configurations. The orientations of said polariser 5, modulator 14 and analyser 9 being respectively P, M and A, the calibration allowing to determinate said coefficents is performed according to the following configurations P - M = ± 45°; A = 0°, 90° ; M = ± 45° and P-M = ± 45° ; A = ± 45°; M = ± 45°.

When working in the VIS-UV range with a conventional ellipsometer, the value of those coefficients is found to slightly depend on the photon energy of the radiation beam. Therefore, they can be considered as constant or linearly dependent with the photon energy. Accordingly, the value of $T_1$, $T_2$, $C_{c,0}$, $C_{c,\omega}$ and $C_{s,2\omega}$ is estimated from the corresponding zero or first order polynomial that best fits the experimental values of those coefficients resulting from the calibration. However, with an ellipsometer using far ultraviolet light source, a stronger spectral dependence of the coefficients is measured. Preferably, a fourth degree polynomial allows to evaluate the calibration coefficients.

Finally third processing means produces the value $\psi$ and $\Delta$ from $I_0$, $I_s$, and $I_c$ according to simple trigonometric formulae.

The polarimetric system and the method of polarimetric measurement of the representative parameters of a sample according to the invention have been the object of various implementations whose following example(s) demonstrate(s) the quality of the results obtained.

EXAMPLE 1

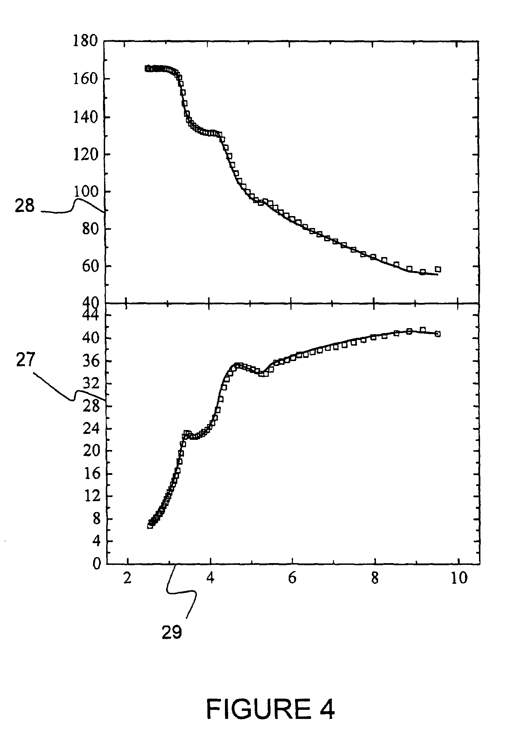

The method has been first implemented to study a crystal silicon (c - Si) wafer eventually covered with a native oxide layer. Figure 4 shows the experimental (squares) and best fitted (solid line) values obtained as a function of the incident photon energy 29 for the ellipsometric angles $\psi$ 27 and $\Delta$ 28. The experimental values were simulated considering the wafer as a c - Si semi-infinite media coated by a thin rough native oxide layer. Said coating layer is composed of a mixture of voids and a-SiO$_2$. The fitting parameters were the angle of incidence and the thickness of the native oxide layer. The volume fraction of the void inclusions was kept constant at 35 % to avoid correlation with the rough layer thickness. The resulting best fitted values for the rough native oxide layer thickness and the angle of incidence were 16 ± 3 Å and 73.7 ± 0.1° respectively.

EXAMPLE 2

The method has also been implemented to study a thin SiO$_2$ film thermally grown on a c - Si wafer. The optical response of this sample has been modelled assuming a bilayer structure deposited on a semi-infinite c - Si medium. The layer in contact with the c - Si media is supposed to be composed of pure SiO$_2$. The second layer, located on top, accounts for the possible roughness of the oxide. The thickness of those two layers was used as the fitting parameters.

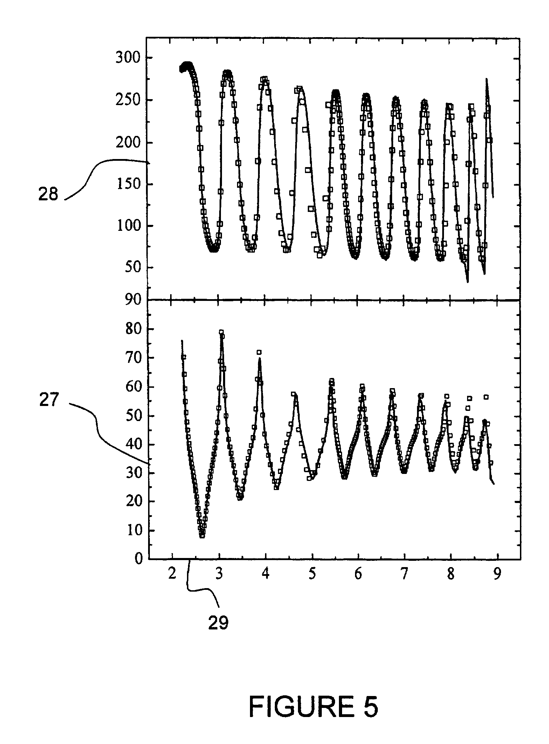

Figure 5 shows the experimental (squares) and simulated values (solid line) of $\psi$ 27 and $\Delta$ 28 using the best fitted values of 6270 ± 10 Å for the pure SiO$_2$ layer and 70 ± 5 Å for the rough layer, giving a total thickness for the thermal SiO$_2$ film of 6340 ± 15 Å. This sample has been measured independently using conventional VIS-UV ellipsometry and the experimental values were fitted considering the same bilayer model. The resulting best fitted total thickness for the thermal SiO$_2$ film was 6330 ± 10 Å, which is consistent within the error interval with the value determined with far ultraviolet ellipsometry, thus confirming the performance of this ellipsometric technique.

**Claims**

1. A method of polarimetric measurement of a sample, represented by the coefficients of a Mueller matrix, in which the sample located inside an air tight chamber is illuminated by a polarised incident light beam produced by a polarisation state generator (PSG), said beam being reflected by the sample, analysed by a polarisation state detector (PSD) and then measured by detections means, said PSG, sample, PSD and detection means being located in at least an air tight chamber wherein,

   - one illuminates the sample with a light beam in the spectral range from the far ultraviolet to the visible,

- one extracts the coefficients of the Mueller matrix from polarimetric measurements performed under a low partial pressure of far ultraviolet highly absorbing gases.

2. A method of polarimetric measurement according to claim 1, wherein one evacuates far ultraviolet highly absorbing gases by realising an overpressure of far ultraviolet non absorbing gas inside said chambers.

3. A method of polarimetric measurement according to claim 1, wherein one evacuates far ultraviolet highly absorbing gases by pumping down said chambers.

4. A method of polarimetric measurement according to claim 1, wherein one evacuates far ultraviolet highly absorbing gases by pumping down said chambers and then refilling said chambers with far ultraviolet non absorbing gas.

5. A method of polarimetric measurement according to any one of claims 1 to 4, wherein the energy range of the incident light beam emitted by the excitation section is between 1.5 and 9.5 eV.

6. A method of polarimetric measurement according to any one of claims 1 to 5, wherein the parameters representative of the sample are measured by ellipsometry.

7. A method of polarimetric measurement according to claim 6, wherein the incident light beam is modulated by a phase modulator at a frequency $\omega$, the intensity I(t) measured by the detection means as a function of the modulation amplitude $\delta(t)$ is:

$$I(t)=I(I_0 + I_s \sin(\delta(t)) + I_c \cos(\delta(t)))$$

where

$$\delta(t) = A_0 + A_1 \sin\omega t + \sum_{n=2} A_n \sin(n\omega t + \phi_n)$$

- a first Fourier-transform processing means analyses the signal I(t) into Fourier components, $S_0$(dc), $S_1$, $S_2$ at frequency $\omega$ and at frequency $2\omega$,
- second processing means produces values $I_o$, $I_s$, $I_c$ from the measured harmonics So, $S_1$, $S_2$ according to the following relation:

$$\begin{pmatrix} S_0 \\ S_1 \\ S_2 \end{pmatrix} = I \begin{pmatrix} 1 & 0 & 0 \\ 0 & 2T_1 J_1(A) & 0 \\ 0 & 0 & 2T_2 J_2(A) \end{pmatrix} \cdot \begin{pmatrix} 1 & c_{x,0} & J_0(A)+c_{c,0} \\ 0 & 1 & c_{c,\omega} \\ 0 & c_{s,2\omega} & 1 \end{pmatrix} \cdot \begin{pmatrix} I_0 \\ I_s \\ I_C \end{pmatrix}$$

where $J_0$, $J_1$ and $J_2$ are the Bessel functions of order 0, 1, 2; $T_1$ and $T_2$ are specific constant of the detection means and $C_{c,0}$, $C_{s,0}$, $C_{s,\omega}$ and $C_{s,2\omega}$ describe the weak coupling between the three Fourier components, the modulation amplitude A being generally chosen such as $J_0(A) + C_{c,0} = 0$:

$$S\omega \sim T_1 I_s + C_{s,\omega} I_c$$

$$S_{2\omega} \sim T_2 I_c + C_{s,2\omega} I_s$$

- The spectroscopic variations of $(T_1, T_2)$ and $(C_{c,0}, C_{s,0}, C_{s,\omega}$ and $C_{s,2\omega})$ are calculated by fitting a polynomial variation to the experimental values measured with the orientations of said polarisation state generator, modulator and polarisation state detector, being respectively P, M and A, said calibration is performed according to configurations P - M = ± 45°; A = 0°, 90°; M = ± 45° and P - M = ± 45°; A = ± 45°; M = ± 45°,
- third processing means produces the value $\psi$ and $\Delta$ from $I_0$, $I_s$, and $I_c$ according to simple trigonometric formulae.

8. A method of polarimetric measurement according to claim 7, wherein a fourth degree polynomial is used for fitting the experimental values ($T_1$, $T_2$, $C_{c,0}$, $C_{s,0}$, $C_{s,\omega}$ and $C_{s,2\omega}$).

9. A method of polarimetric measurement according to claim 7 or 8, wherein the frequency $\omega$ of said modulator is between 30 and 60kHz.

10. Polarimetric system for analysing a sample comprising:

- • an excitation section emitting a light beam, said excitation section comprising a polarisation state generator and optical means to focus said beam onto the sample,
- • a sample holder,
- • an analysis section comprising a polarisation state detector, detection means,

   wherein

- the light beam emitted by the excitation section is in the spectral range from the far ultraviolet to the visible,
- the light beam propagates through the excitation section up to through the analysis section under a low partial pressure of far ultraviolet absorbing gases

and the polarimetric system comprises at least an air tight chamber, said chambers containing said excitation section, said analysis section and the sample-holder.

11. Polarimetric system according to claim 10 wherein said chambers are interconnected so as to form a unique chamber.

12. Polarimetric system according to claim 10 or 11, wherein said chambers comprise a pumping station and pressure monitoring means.

13. Polarimetric system according to claim 12, wherein the pumping station comprises at least a primary pump.

14. Polarimetric system according to any one of claims 10 to 13, wherein the polarimetric system comprises heating means for heating said chambers or for the thermal stability of the optical components.

15. Polarimetric system according to claim 14 wherein the polarimetric system contains control means for regulating the temperature of the heating means within a predetermined temperature range.

16. Polarimetric system according to any one of claims 10 to 15, wherein the polarimetric system comprises a source of far ultraviolet non absorbing gases and means for introducing and evacuating said gases into said chambers.

17. Polarimetric system according to claim 16, wherein said gases comprises nitrogen ($N_2$).

18. Polarimetric system according to any one of claims 10 to 17, wherein the sample holder comprises means for tilting said sample holder controlled by external means.

19. Polarimetric system according to any one of claims 10 to 18, wherein the excitation section comprises a monochromator positioned before the polariser.

20. Polarimetric system according to any one of claims 10 to 18, wherein the detection means comprises a monochromator.

21. Polarimetric system according to any one of claims 19 and 20, wherein a slit is positioned at the entrance of said monochromator and focusing means focuses the beam onto the said entrance slit.

22. Polarimetric system according to claim 21, wherein said focusing means comprises a $MgF_2$ lens or another FUV transparent material.

**23.** Polarimetric system according to any one of claims 10 to 22, wherein the detection means comprises a first detector covering radiations in the spectral range from visible to ultraviolet and a second detector for radiations in the far ultraviolet spectrum.

**24.** Polarimetric system according to claim 23, wherein a diaphragm is located in front of the first detector and the second detector in order to reject parasitic beams.

**25.** Polarimetric system according to any one of claims 10 to 24, wherein said optical means comprises concave mirrors.

**26.** Polarimetric system according to claim 25, wherein said concave mirrors are coated with a protecting layer, said layer being in $MgF_2$.

**27.** Polarimetric system according to any one of claims 10 to 26, wherein said polarimetric system is an ellipsometer.

**Amended claims in accordance with Rule 86(2) EPC**

**1.** A method of polarimetric measurement of a sample, represented by the coefficients of a Mueller matrix, in which the sample located inside an air tight chamber is illuminated by a polarised incident light beam produced by a polarisation state generator (PSG), said beam being reflected by the sample, analysed by a polarisation state detector (PSD) and then measured by detections means, said PSG, sample, PSD and detection means being located in at least an air tight chamber
According to the invention,

- one illuminates the sample with a light beam in the spectral range from the far ultraviolet to the visible,
- one extracts the coefficients of the Mueller matrix from polarimetric measurements performed under a low partial pressure of far ultraviolet highly absorbing gases,

and

- one evacuates far ultraviolet highly absorbing gases by pumping down said chambers.

**2.** A method of polarimetric measurement according to claim 1, wherein one evacuates far ultraviolet highly absorbing gases by pumping down said chambers and then refilling said chambers with far ultraviolet non absorbing gas.

**3.** A method of polarimetric measurement according to any one of claims 1 or 2, wherein the energy range of the incident light beam emitted by the excitation section is between 1.5 and 9.5 eV.

**4.** A method of polarimetric measurement according to any one of claims 1 to 3, wherein the parameters representative of the sample are measured by ellipsometry.

**5.** A method of polarimetric measurement according to claim 4, wherein the incident light beam is modulated by a phase modulator at a frequency $\omega$, the intensity l(t) measured by the detection means as a function of the modulation amplitude $\delta(t)$ is:

$$l(t) = l(l_0 + l_s \sin(\delta(t)) + l_c \cos(\delta(t)))$$

where

$$\delta(t) = A_0 + A_1 sin\omega t + \sum_{n=2} A_n sin(n\omega t + \phi_n)$$

- a first Fourier-transform processing means analyses the signal I(t) into Fourier components, $S_0$(dc), $S_1$, $S_2$ at frequency $\omega$ and at frequency $2\omega$,
- second processing means produces values $I_o$, $I_s$, $I_c$ from the measured harmonics $S_0$, $S_1$, $S_2$ according to the following relation:

$$
\begin{pmatrix} S_0 \\ S_1 \\ S_2 \end{pmatrix} = I \begin{pmatrix} 1 & 0 & 0 \\ 0 & 2T_1 J_1(A) & 0 \\ 0 & 0 & 2T_2 J_2(A) \end{pmatrix} \cdot \begin{pmatrix} 1 & c_{s,0} & J_0(A) + c_{c,0} \\ 0 & 1 & c_{c,\omega} \\ 0 & c_{s,2\omega} & 1 \end{pmatrix} \cdot \begin{pmatrix} I_0 \\ I_S \\ I_C \end{pmatrix}
$$

where $J_0$, $J_1$ and $J_2$ are the Bessel functions of order 0, 1, 2; $T_1$ and $T_2$ are specific constant of the detection means and $C_{c,0}$, $C_{s,0}$, $C_{s,\omega}$ and $C_{s,2\omega}$ describe the weak coupling between the three Fourier components, the modulation amplitude A being generally chosen such as $J_0(A) + C_{c,0}$, = 0:

$$S\omega \sim T_1 I_s + c_{s,\omega} I_c$$

$$S_{2\omega} \sim T_2 I_c + C_{s,2\omega} I_s$$

- The spectroscopic variations of ($T_1$, $T_2$) and ($c_{c,0}$, $C_{s,0}$, $C_{s,\omega}$ and $C_{s,2\omega}$) are calculated by fitting a polynomial variation to the experimental values measured with the orientations of said polarisation state generator, modulator and polarisation state detector, being respectively P, M and A, said calibration is performed according to configurations P - M = $\pm$ 45°; A = 0°, 90°; M = $\pm$ 45° and P - M = $\pm$ 45°; A = $\pm$ 45°; M = $\pm$ 45°,
- third processing means produces the value $\Psi$ and $\Delta$ from $I_o$, $I_s$, and $I_c$ according to simple trigonometric formulae.

**6.** A method of polarimetric measurement according to claim 5, wherein a fourth degree polynomial is used for fitting the experimental values ($T_1$, $T_2$, $C_{c,0}$, $C_{s,0}$, $C_{s,\omega}$ and $C_{s,2\omega}$).

**7.** A method of polarimetric measurement according to claim 5 or 6, wherein the frequency $\omega$ of said modulator is between 30 and 60kHz.

**8.** A polarimetric system for analysing a sample comprising :

- an excitation section emitting a light beam, said excitation section comprising a polarisation state generator (PSG) and optical means to focus said beam onto the sample,
- a sample holder,
- an analysis section comprising a polarisation state detector (PSD), detection means.

According to the invention,

- the light beam emitted by the excitation section is in the spectral range from the far ultraviolet to the visible,
- the light beam propagates through the excitation section up to through the analysis section under a low partial pressure of far ultraviolet absorbing gases,

the polarimetric system comprises at least an air tight chamber, said chambers containing said excitation section, said analysis section and the sample-holder,
and said chambers comprise a pumping station and pressure monitoring means.

**9.** Polarimetric system according to claim 8 wherein said chambers are interconnected so as to form a unique chamber.

**10.** Polarimetric system according to claim 8 or 9, wherein the pumping station comprises at least a primary pump.

**11.** Polarimetric system according to any one of claims 8 to 10, wherein the polarimetric system comprises heating means for heating said chambers or for the thermal stability of the optical components.

**12.** Polarimetric system according to claim 11 wherein the polarimetric system contains control means for regulating the temperature of the heating means within a predetermined temperature range.

**13.** Polarimetric system according to any one of claims 8 to 12, wherein the polarimetric system comprises a source of far ultraviolet non absorbing gases and means for introducing and evacuating said gases into said chambers.

**14.** Polarimetric system according to claim 13, wherein said gases comprises nitrogen ($N_2$).

**15.** Polarimetric system according to any one of claims 8 to 14, wherein the sample holder comprises means for tilting said sample holder controlled by external means.

**16.** Polarimetric system according to any one of claims 8 to 15, wherein the excitation section comprises a monochromator positioned before the polariser.

**17.** Polarimetric system according to any one of claims 7 to 15 wherein the detection means comprises a monochromator.

**18.** Polarimetric system according to any one of claims 16 and 17, wherein a slit is positioned at the entrance of said monochromator and focusing means focuses the beam onto the said entrance slit.

**19.** Polarimetric system according to claim 18, wherein said focusing means comprises a $MgF_2$ lens or another FUV transparent material.

**20.** Polarimetric system according to any one of claims 8 to 19, wherein the detection means comprises a first detector covering radiations in the spectral range from visible to ultraviolet and a second detector for radiations in the far ultraviolet spectrum.

**21.** Polarimetric system according to claim 20, wherein a diaphragm is located in front of the first detector and the second detector in order to reject parasitic beams.

**22.** Polarimetric system according to any one of claims 8 to 21, wherein said optical means comprises concave mirrors.

**23.** Polarimetric system according to claim 22, wherein said concave mirrors are coated with a protecting layer, said layer being in $MgF_2$.

**24.** Polarimetric system according to any one of claims 8 to 23, wherein said polarimetric system is an ellipsometer.

FIGURE 1

FIGURE 2

FIGURE 3

FIGURE 4

**FIGURE 5**

**EP 1 345 024 A1**

European Patent Office

**EUROPEAN SEARCH REPORT**

Application Number

EP 02 29 0611

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 666 200 A (DREVILLON BERNARD ET AL) 9 September 1997 (1997-09-09) | 1-17,27 | G01N21/21 |
| A | * the whole document * | 18-21, 23-25 | |
| Y | LIM S-G ET AL.: "Optical characterization of 4H-SiC by far ultraviolet spectroscopic ellipsometry" APPLIED PHYSICS LETTERS, vol. 79, no. 2, 9 July 2001 (2001-07-09), pages 162-164, XP002206304 * page 162 * | 1-6, 10-13, 16,17,27 | |
| Y | BREVILLON B: "PHASE MODULATED ELLIPSOMETRY FROM THE ULTRAVIOLET TO THE INFRARED: IN SITU APPLICATION TO THE GROWTH OF SEMICONDUCTORS" PROGRESS IN CRYSTAL GROWTH AND CHARACTERIZATION OF MATERIALS, ELSEVIER PUBLISHING, BARKING, GB, vol. 27, no. 1, 1993, pages 1-87, XP000579689 ISSN: 0960-8974 * sections II.1-II.4 * | 7-9 | TECHNICAL FIELDS SEARCHED (Int.Cl.7) G01N |
| Y | US 6 307 627 B1 (VURENS GERARD H) 23 October 2001 (2001-10-23) * column 5, line 8 - column 6, line 12; column 7, lines 47-53 * | 14,15 | |
| A | US 5 237 447 A (MARDESICH NICK ET AL) 17 August 1993 (1993-08-17) * column 1, lines 22-25 and 56-58 * | 22,26 | |

The present search report has been drawn up for all claims

| Place of search | Date of completion of the search | Examiner |
|---|---|---|
| MUNICH | 16 July 2002 | Hoogen, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**ANNEX TO THE EUROPEAN SEARCH REPORT
ON EUROPEAN PATENT APPLICATION NO.**  EP 02 29 0611

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2002

| Patent document cited in search report | | Publication date | Patent family member(s) | | Publication date |
|---|---|---|---|---|---|
| US 5666200 | A | 09-09-1997 | FR<br>JP<br>JP | 2731074 A1<br>2746865 B2<br>9015140 A | 30-08-1996<br>06-05-1998<br>17-01-1997 |
| US 6307627 | B1 | 23-10-2001 | US<br>US<br>JP | 6134011 A<br>2002054290 A1<br>11173994 A | 17-10-2000<br>09-05-2002<br>02-07-1999 |
| US 5237447 | A | 17-08-1993 | NONE | | |

EPO FORM P0459

For more details about this annex : see Official Journal of the European Patent Office, No. 12/82